(19) Europäisches Patentamt
European Patent Office
Office européen des brevets

(11) **EP 3 158 326 B1**

(12) **FASCICULE DE BREVET EUROPEEN**

(45) Date de publication et mention de la délivrance du brevet:
**23.03.2022 Bulletin 2022/12**

(21) Numéro de dépôt: **15727360.8**

(22) Date de dépôt: **01.06.2015**

(51) Classification Internationale des Brevets (IPC):
**G01N 23/046** $^{(2018.01)}$     **A61B 6/03** $^{(2006.01)}$

(52) Classification Coopérative des Brevets (CPC):
**G01N 23/046**

(86) Numéro de dépôt international:
**PCT/EP2015/062090**

(87) Numéro de publication internationale:
**WO 2015/193086 (23.12.2015 Gazette 2015/51)**

(54) **PROCÉDÉ DE TOMOGRAPHIE DYNAMIQUE DIT "4D"**

DYNAMISCHE 4D-TOMOGRAFIEVERFAHREN

"4D" DYNAMIC TOMOGRAPHY METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2014 FR 1455643**

(43) Date de publication de la demande:
**26.04.2017 Bulletin 2017/17**

(73) Titulaires:
• **Centre National de la Recherche Scientifique**
**75016 Paris (FR)**
• **Ecole Normale Supérieure de Cachan**
**94230 Cachan (FR)**

(72) Inventeurs:
• **HILD, François**
**92290 Chatenay Malabry (FR)**
• **LECLERC, Hugo**
**94230 Cachan (FR)**
• **ROUX, Stéphane**
**93110 Rosny-sous-Bois (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**US-A1- 2011 142 315**

• **GLENN R MYERS ET AL: "Dynamic tomography with a priori information", APPLIED OPTICS, OPTICAL SOCIETY OF AMERICA, WASHINGTON, DC; US, vol. 50, no. 20, 10 juillet 2011 (2011-07-10), pages 3685-3690, XP001564234, ISSN: 0003-6935, DOI: 10.1364/AO.50.003685 [extrait le 2011-07-08]**
• **H. LECLERC ET AL: "Projection Savings in CT-based Digital Volume Correlation", EXPERIMENTAL MECHANICS, 2 mai 2014 (2014-05-02), pages 1-13, XP055154362, ISSN: 0014-4851, DOI: 10.1007/s11340-014-9871-5 cité dans la demande**

**Description**

Le domaine général de l'invention est celui de la tomographie. Les domaines plus particuliers de l'invention concernent l'étude de l'évolution temporelle de matériaux soumis in situ à des sollicitations contrôlées. A titre d'exemples, on peut citer le cas des écoulements diphasiques immiscibles dans un milieu poreux, à différentes saturations, ou encore la déformation mécanique de matériaux soumis à des efforts croissants.

La tomographie est une technique qui consiste à reconstruire le volume d'un objet à partir d'une série de radiographies bidimensionnelles prises sous différents angles. Généralement, les rayonnements utilisés sont des rayons X choisis pour leur aptitude à traverser la matière. Cette technique est basée sur la différence d'absorption du rayonnement par les éléments de volume de la pièce radiographiée. Elle est ainsi capable de révéler la présence d'inhomogénéités comme des porosités ou des grains de différentes matières.

Le principal avantage de cette technique est de pouvoir observer à l'intérieur de l'échantillon de manière non destructive.

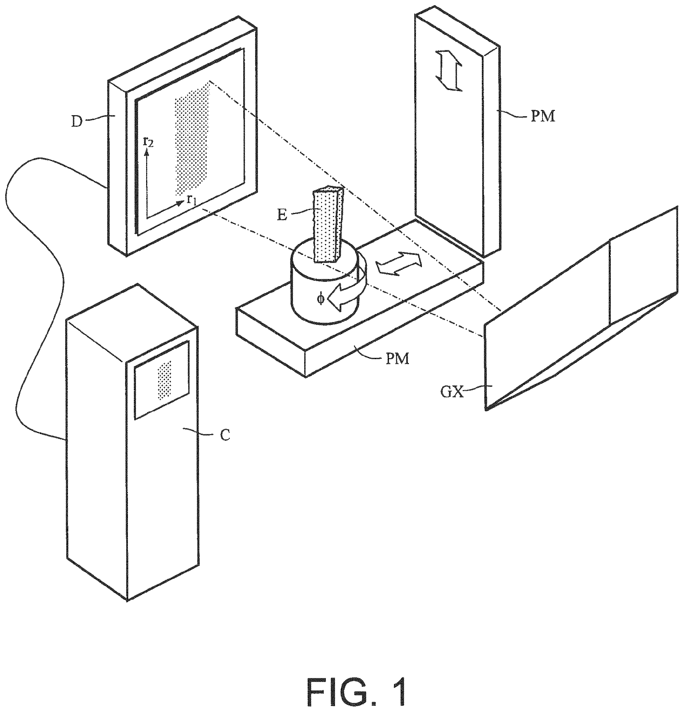

Le synoptique d'un tomographe est représenté en figure 1. Il comprend principalement :

- Un générateur GX de rayons X dont l'énergie et l'intensité sont adaptées à la taille et à l'absorption de l'échantillon E à analyser. Le faisceau de rayons X peut traverser une épaisseur comprise entre quelques millimètres et quelques centimètres, selon la nature de la matière traversée et l'énergie ou la fréquence des rayons X ;
- Un ensemble de platines motorisées PM en translation et en rotation portant l'échantillon E. Les courses sont généralement de quelques dizaines de centimètres. Cet ensemble comporte en particulier une platine en rotation permettant de faire tourner l'échantillon E d'un angle $\phi$ sur 360 degrés avec une grande précision ;
- Un détecteur matriciel D dont la définition en ligne et en colonne est généralement de plusieurs milliers de pixels. A titre d'exemple, le détecteur peut être constitué d'un scintillateur au césium assurant la conversion des rayons X en photons visibles, couplé à un ensemble de photodétection dans cette bande de longueurs d'onde visibles. Cet ensemble peut être à base de détecteurs « CMOS », acronyme signifiant « Complementary Metal Oxide Semiconductor » ou « CCD », acronyme signifiant « Charge Coupled Deviced ». On note $r = (r_1, r_2)$ un repère pris dans le plan du détecteur matriciel et $I(r,\phi)$ l'intensité au point $r$ de la radiographie lorsque l'échantillon E a subi un angle de rotation $\phi$ ;

- Des moyens de pilotage et de commande du générateur et des différentes platines non représentés sur la figure 1 ;
- Des moyens d'acquisition et de traitement des différentes données et de reconstruction tridimensionnelle de l'échantillon à partir des différentes radiographies. Ces moyens sont représentés par un calculateur C sur la figure 1.

On utilise le cologarithme de l'intensité et non pas l'intensité elle-même pour linéariser l'absorption qui, par nature, est une fonction exponentielle décroissante de l'épaisseur traversée de l'échantillon E. On définit le sinogramme

$$s(r,\phi) = -\log\left(\frac{I(r,\phi)}{I_0(r)}\right)$$

$s(r,\phi)$ par : où $I(r,\phi)$ représente l'intensité ayant traversé l'échantillon et reçue par le détecteur et $I_0(r)$ l'intensité reçue en l'absence d'échantillon.

L'image tridimensionnelle de l'échantillon analysé est représentée par la densité radiographique $f(x)$ au point $x$. La « reconstruction » est l'opération mathématique linéaire ou transformée de Radon inverse, notée R, qui permet de calculer $f(x)$ à partir de l'ensemble des radiographies :

$$f(x) = R[s(r,\phi)]$$

Les points $x$ sont également appelés « voxels », contraction de « VOlumetric piXELs », le terme « pixel » étant, lui-même, la contraction de « PICTure ELement ». Selon l'application, leur taille varie entre une fraction de micromètre et quelques centaines de micromètres. Compte-tenu de la grande quantité de données à traiter pour effectuer cette reconstruction tomographique, il est aujourd'hui souvent fait appel à une implémentation de l'algorithme de reconstruction sur processeurs graphiques « GPU », acronyme signifiant « Graphics Processing Unit ».

Actuellement, lorsque l'on souhaite suivre l'évolution temporelle d'un milieu soumis par exemple à des sollicitations mécaniques extérieures, il convient d'acquérir une série d'images tomographiques, et de les analyser individuellement.

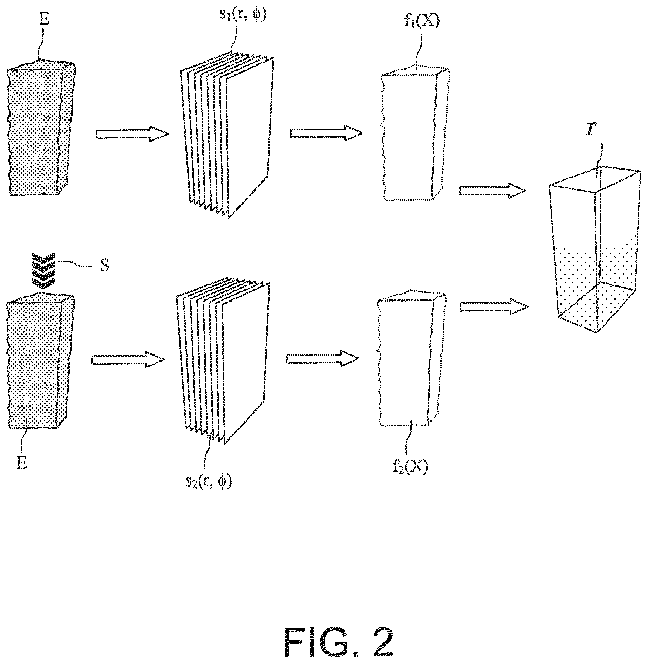

Les écoulements diphasiques immiscibles en milieux poreux constituent une classe importante de problèmes où l'imagerie tridimensionnelle résolue en temps est utilisée pour caractériser ces milieux, par exemple pour l'industrie pétrolière. Ainsi, pour caractériser à différents niveaux de saturation les perméabilités partielles et la pression capillaire, il faut imager, pour différents volumes de fluide injectés, l'ensemble du milieu poreux et segmenter les deux phases fluides. La démarche est illustrée par la figure 2. Dans un premier temps, on réalise une tomographie de l'échantillon E que l'on souhaite analyser dans son état de référence. En appelant $s_1(r,\phi)$ le sinogramme de l'échantillon imagé, on calcule une première reconstruction tridimensionnelle $f_1(x)$,

$$f_1(x) = R[s_1(r,\phi)]$$

Dans un second temps, on applique la sollicitation souhaitée sur l'échantillon. La sollicitation S est symbolisée par une flèche noire en chevrons sur la figure 2. On réalise une seconde tomographie de l'échantillon E. En appelant $s_2(r,\phi)$ le nouveau sinogramme de l'échantillon, on calcule une seconde reconstruction tridimensionnelle $f_2(x)$ qui vaut :

$$f_2(x) = R[s_2(r,\phi)]$$

La connaissance de ces deux fonctions permet de caractériser la transformation T due à la sollicitation S sur l'échantillon E.

A titre d'exemple, les figures 3, 4 et 5 représentent schématiquement la même section d'un milieu poreux P à différents stades de l'invasion de l'espace poral de cette section par un fluide. Ainsi, la figure 3 montre une section du milieu poreux P dans son état initial à l'instant $t_0$. L'espace poreux est supposé saturé par un fluide a schématisé par un niveau de blanc et le squelette solide du milieu poreux est en gris sombre. Lors de l'invasion du milieu poreux par un second fluide b représenté en noir sur les figures 4 et 5, celui-ci occupe progressivement la section comme on le voit sur ces deux figures représentant le milieu poreux aux instants $t_1$ et $t_2$. Chacune de ces figures nécessite une grande quantité d'informations pour être caractérisée. La figure 6, qui montre la différence entre les deux états $t_1$ et $t_0$, nécessite une bien moindre quantité d'informations.

Tous les phénomènes de croissance ou de propagation relèvent de cette même classe. Ainsi, la propagation d'une fissure dans un solide où l'on image directement la variation de contraste liée à l'ouverture de la fissure peut être décrite par ce même formalisme. La solidification donnant lieu à une séparation de phases constitue un autre exemple de ces phénomènes.

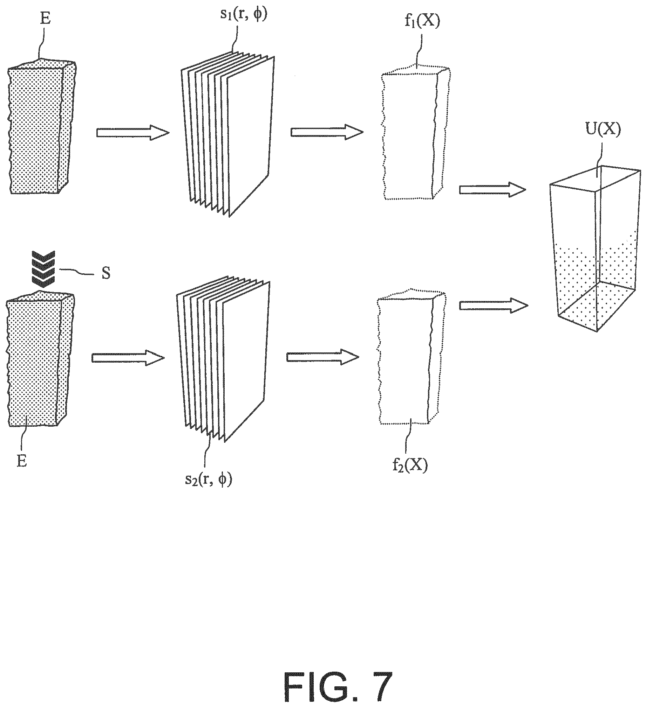

Pour analyser, à partir de tomographies, les champs de déplacements et de déformations d'un échantillon lorsqu'il est soumis à une sollicitation mécanique S, on utilise généralement une technique dite de corrélation d'images volumiques, plus connue sous l'acronyme anglais « DVC », signifiant « Digital Volume Corrélation ». Son principe est exposé en figure 7.

Sous l'effet de la sollicitation, les points x à l'intérieur de l'échantillon se sont déplacés aux points X(x). L'hypothèse la plus courante de la DVC est de supposer que les coefficients d'absorption locaux n'ont subi qu'un mouvement sans autre altération, soit :

$$f_2(X) = f_1(x)$$

que l'on peut aussi écrire :

$$f_2(X) = f_1(X - U(X)) \qquad\qquad\qquad \text{équation (1)}$$

où $U(X)$ est la forme eulérienne du champ de déplacement.

Le champ de déplacement U(X) peut être décomposé sur une base de champs de déplacements élémentaires $\psi_i$ :

$$U(X) = \sum_i a_i \psi_i(X)$$

Les champs $\psi_i$ sont, par exemple, des fonctions de forme d'éléments finis. Les amplitudes $a_i$ sont déterminées au moyen de la minimisation de la fonctionnelle suivante :

$$\{a\} = \operatorname{argmin}_{\{b\}} \iiint \left(f_2(X) - f_1(X - b_i\psi_i(X))\right)^2 dX \qquad \text{équation (2)}$$

On obtient ainsi le champ des déplacements *U(X)*, à partir duquel il est possible de procéder à une exploitation quantitative des déformations, des éventuelles discontinuités, ou tout autre traitement interprétatif renseignant sur les propriétés mécaniques de l'échantillon. Lors d'un essai mécanique, chaque état de sollicitation demande l'acquisition de radiographies et la reconstruction d'une image tridimensionnelle correspondante.

Un des inconvénients de cette méthode est qu'elle nécessite l'enregistrement et l'exploitation d'une très grande quantité de données. Par exemple, si l'on souhaite avoir une définition de l'image qui soit de l'ordre de 1000 pixels dans chaque direction de l'espace et en faisant l'hypothèse courante que l'échantillonnage angulaire est uniforme et de pas tel que le plus grand déplacement d'un point matériel de l'échantillon entre deux radiographies consécutives est inférieur à un pixel sur le détecteur, il est nécessaire d'enregistrer de l'ordre de 3100 radiographies de l'échantillon, chaque image ayant une définition de 1000 x 1000 pixels, soit au total l'enregistrement de plus de trois milliards de pixels. Dans la plupart des applications, l'enregistrement demande donc une certaine durée, souvent comprise entre une et quelques heures. Pendant ce laps de temps, il est, bien entendu, nécessaire que l'échantillon n'évolue pas. Or, pour certaines applications, il est impossible de garantir la stabilité de l'échantillon si la durée d'enregistrement est trop élevée. La puissance de la source de rayons X, ou la sensibilité du détecteur sont le plus généralement les facteurs limitants pour augmenter la cadence d'acquisition.

Par conséquent, la durée d'enregistrement limite le champ des applications de la DVC par tomographie. En particulier, il est impossible d'enregistrer des phénomènes dynamiques.

De façon générale, pour suivre l'évolution de l'image d'un échantillon de matériau soumis à une transformation T connue au cours du temps *t*, il est naturel de considérer, pour chaque pas de temps, l'acquisition d'une nouvelle image, soit *f(x; t)*, dont le contenu d'information est donné par celui d'une image tridimensionnelle multipliée par le nombre d'acquisitions temporelles $N_t$. L'image à l'instant $t_1$ peut être décrite comme l'effet d'une transformation T de l'image à l'instant $t_0$, soit encore :

$$f(x; t_1) = T[f(x; t_0); p] \qquad \text{Equation (3)}$$

Dans cette écriture, la dénomination collective *p* rassemble l'ensemble des paramètres qui définissent quantitativement et de manière exhaustive la transformation T. Selon cette hypothèse, la connaissance de $f(x; t_0)$ et des paramètres *p* suffit à définir entièrement $f(x; t_1)$. Or, il existe de très nombreux exemples où l'information nécessaire à caractériser les paramètres *p* est très sensiblement moindre que celle définissant $f(x; t_0)$. Le principe du tomographe selon l'invention est de mesurer *p* plutôt *que* $f(x; t_1)$, et ce en exploitant un nombre de projections limité à deux pour chaque instant *t*. Il est à noter que le fait de conduire l'analyse sur un grand nombre d'instants peut rendre l'analyse plus robuste et plus performante.

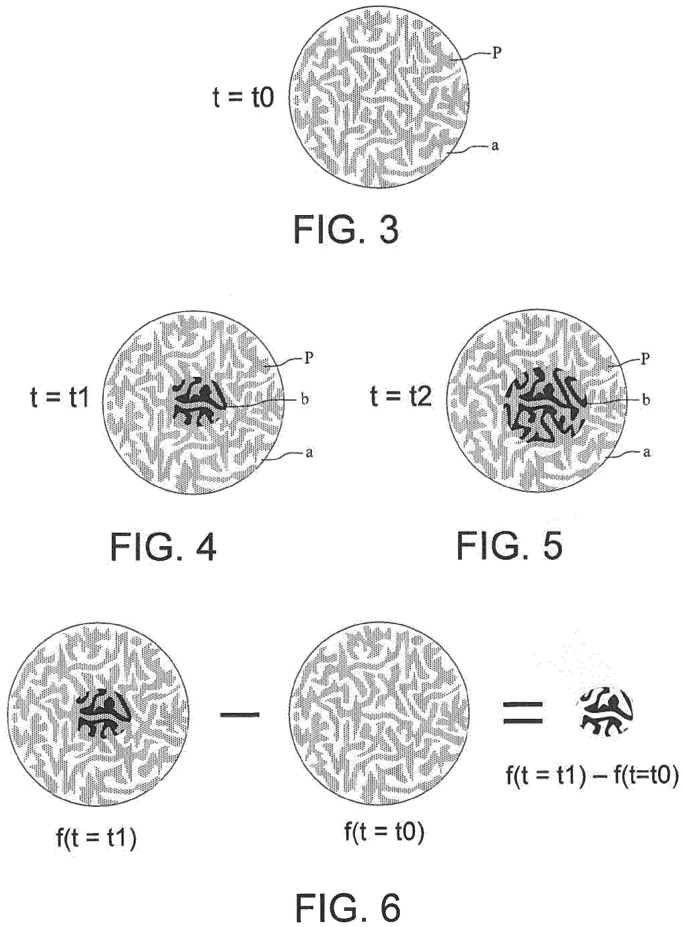

Dans le cas où la lecture de l'image est « directe », comme pour l'exemple des écoulements diphasiques en milieux poreux, il est avantageux de ne s'intéresser qu'à la différence entre deux états successifs, par exemple les instants $t_1$ et $t_0$ ou les instants $t_2$ et $t_1$. Ainsi, la figure 6 représente la variation de l'état du milieu poreux entre les instants $t_1$ et $t_0$. En effet, dans ce cas, la différence ne concerne qu'un nombre limité de voxels, ici d'une part restreint à l'espace poral, et d'autre part confiné dans une région de faible extension. Cette propriété est qualifiée de « parcimonie » et est d'autant plus facilement satisfaite que la fréquence d'acquisition est élevée, limitant ainsi les différences entre deux images. Le fait de disposer de l'image initiale permet de s'abstraire de la complexité du squelette solide qui reste invariant. Les seules variations attendues sont des transitions entre le niveau de gris du fluide envahi a vers celui du fluide envahisseur b. Ainsi, la différence $f(x; t_1)$ - $f(x; t_0)$ ne peut prendre que les deux valeurs 0 ou la différence des niveaux de gris des deux fluides pour une invasion irréversible, et ce exclusivement si à l'instant $t_0$, le voxel *x* était occupé par le fluide a. Il s'agit d'un problème de reconstruction binaire parcimonieuse. Dans ce cas, la transformation *T* se résume à l'addition du champ $f(x; t_1)$ - $f(x; t_0)$ binaire et parcimonieux et ce sont ces deux caractères qui réduisent la complexité du problème. De plus, le front d'invasion est limité à l'interface entre les deux fluides, ce qui réduit encore un peu plus la difficulté du problème. L'acquisition d'une série temporelle de paires de projections combinée à une rotation continue du milieu poreux permet de contraindre le problème de manière supplémentaire. En effet, une fois une zone envahie, elle ne peut plus évoluer. Dans ce cas, il peut être intéressant de représenter l'ensemble des transformations T, par un champ supporté par l'espace poral et dont la valeur est le temps auquel le pore a été envahi par le second fluide. Un seul temps suffit si cette invasion est irréversible. De plus, la continuité du fluide envahisseur impose que ce temps d'invasion ne présente pas de minima locaux.

Comme nous l'avons vu précédemment, une autre classe de transformation décrit l'évolution temporelle d'un objet ou d'une pièce mécanique par son seul champ de déplacement. Ce champ peut être un simple mouvement de corps rigide ou plus complexe et attaché à un ensemble de pièces mobiles, donnant lieu à un ou plusieurs mécanismes et qui peut être caractérisé par quelques degrés de liberté cinématiques décrivant le mouvement d'objets rigides les uns par rapport aux autres.

Plus généralement, les objets déformables peuvent être décrits au premier ordre par un champ de déplacement tridimensionnel dont la complexité est génériquement bien moindre que celle de la microstructure de l'objet lui-même. Dans ce cas, la transformation T est décrite par l'équation (1), et les paramètres $p$ sont ici les composantes du champ de déplacement. Comme on l'a vu, le champ de déplacement $U(X)$ peut être décomposé sur une base de champs de déplacements élémentaires $\psi_i$: $U(X) = \sum a_i \psi_i(X)$ et les amplitudes $\{a\}$ constituent les paramètres $p$ de la transformation.

Les champs $\psi_i$ sont par exemple des fonctions de forme d'éléments finis. Là encore, la base de champs de déplacements élémentaires $\psi_i$ comporte beaucoup moins d'inconnues que la base de données d'enregistrement. Ainsi, en reprenant l'exemple précédent, chaque élément fini peut avoir des dimensions 10 fois supérieures à celles d'un voxel. En prenant en compte que le champ de déplacement est calculé selon les trois directions de l'espace, il comporte donc environ 330 fois moins de données que l'enregistrement primaire des voxels, soit 3 millions de données pour $U(X)$ contre un milliard pour $f(X)$.

Le procédé de tomographie selon l'invention exploite cette propriété. Comme on l'a vu, pour analyser les déplacements d'un échantillon sous l'effet d'une sollicitation, le nombre de données nécessaires est bien moins important que celui nécessaire à la tomographie initiale de l'échantillon. En pratique, dans un grand nombre d'applications, deux images de l'échantillon déformé suffisent. L'algorithme de détermination du champ de déplacement nécessite quelques aménagements par rapport à la technique DVC décrite ci-dessus. Il sera dénommé P-DVC pour « Projection-based Digital Volume Corrélation » dans la suite.

On connaît le document GLENN R MYERS ET AL, "Dynamic tomography with a priori information", APPLIED OPTICS, OPTICAL SOCIETY OF AMERICA, WASHINGTON, DC; US, vol. 50, no. 20, doi:10.1364/AO.50.003685, ISSN 0003-6935, (20110710), pages 3685 - 3690, décrivant un système de tomographie suivant l'évolution d'un phénomène diphasique se propageant dans un objet donné par l'enregistrement successif de radiographies prises en rotation autour de l'objet. Pendant la durée du phénomène, le système tourne 30 fois sur lui-même et prend 72 radiographies par rotation pour une durée totale d'expérimentation de 43 minutes.

Le document US2011142315 décrit un tomographe réalisant l'enregistrement de radiographies prises uniquement en rotation. Il s'agit d'un scanner ne fonctionnant pas en temps réel.

Ainsi, le tomographe utilisé lors du procédé l'invention comporte les moyens nécessaires permettant de réaliser deux radiographies simultanées, permettant de suivre l'évolution de la déformation de l'échantillon en temps réel. On appelle ce type de tomographie : « tomographie dynamique ou tomographie 4D ».

Plus précisément, l'invention a pour objet un procédé pour déterminer des évolutions d'un objet au moyen d'un tomographe comportant au moins une première source d'émission, un premier détecteur matriciel et des moyens de calcul agencés pour réaliser une tomographie initiale d'un objet à partir de radiographies issues du premier détecteur matriciel prises sous différents angles, caractérisé en ce que :

le tomographe comporte une seconde source d'émission, un second détecteur matriciel et ;
lorsque l'objet est soumis à une sollicitation connue à un instant donné, une transformation de l'objet est déterminée quantitativement et de manière exhaustive par un ensemble de paramètres,
les moyens de calcul déterminent les évolutions de l'objet soumis à ladite sollicitation à partir de la seule connaissance d'une première radiographie de l'objet sollicité issue du premier détecteur matriciel, d'une seconde radiographie de l'objet sollicité issue du second détecteur matriciel et de la tomographie initiale, la première radiographie et la seconde radiographie étant prises au même instant donné.

Avantageusement, le tomographe comporte des moyens agencés de façon à enregistrer une succession temporelle de couples de premières et de secondes radiographies de façon à reconstituer l'évolution de l'objet dans le temps.

Avantageusement, l'objet étant un milieu poreux, la sollicitation est l'écoulement d'un second fluide dans ledit milieu poreux comportant un premier fluide.

Avantageusement, la sollicitation est une sollicitation mécanique, l'objet se déformant sous cette sollicitation.

Avantageusement, les moyens de calcul mettent en oeuvre une variante d'un algorithme de type « DVC » ou « Digital Volume Correlation », le champ de déplacement de l'objet sollicité étant déterminé à partir de la minimisation de fonctions dépendant de la première et seconde radiographies de l'objet sollicité, et de la tomographie initiale effectuée dans l'état de référence.

Avantageusement, la première et la seconde source d'émission sont des sources de rayonnement X.

L'invention sera mieux comprise et d'autres avantages apparaîtront à la lecture de la description qui va suivre donnée à titre non limitatif et grâce aux figures annexées parmi lesquelles :

La figure 1 déjà commentée représente le synoptique d'un tomographe selon l'art antérieur ;

La figure 2 déjà commentée représente le principe général d'une transformation entre deux états analysée par l'utilisation d'images 3D de ces différents états ;

Les figures 3, 4 et 5 représentent schématiquement trois états successifs d'une section de milieu poreux lors d'un écoulement diphasique immiscible ;

La figure 6 représente la différence de structure du milieu poreux entre deux instants, ceux des figures 3 et 4 de l'écoulement du fluide ;

La figure 7 déjà commentée représente le principe général d'une transformation entre deux états analysée par l'utilisation d'images 3D de ces différents états dans le cas particulier d'une déformation mécanique analysée par DVC ;

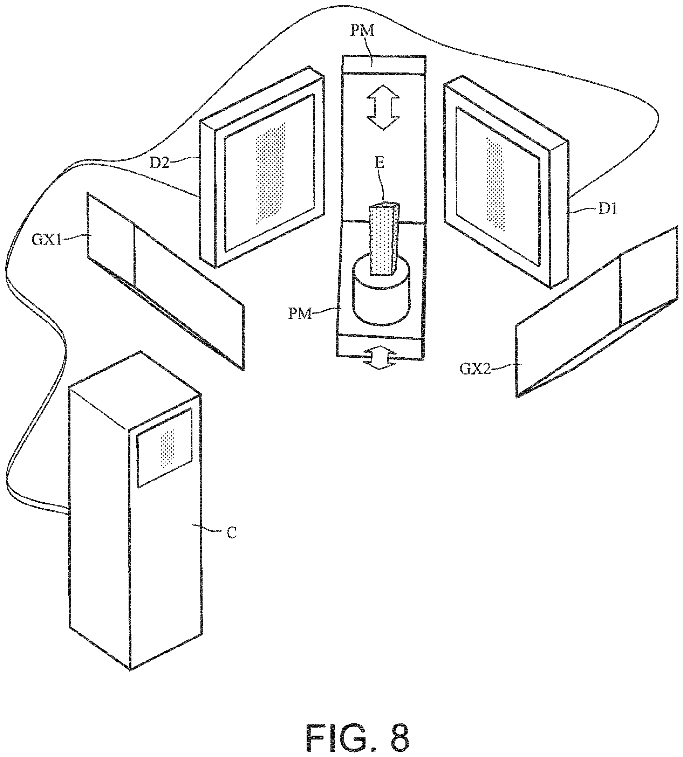

La figure 8 représente le synoptique d'un tomographe utilisé lors d'un procédé selon l'invention ;

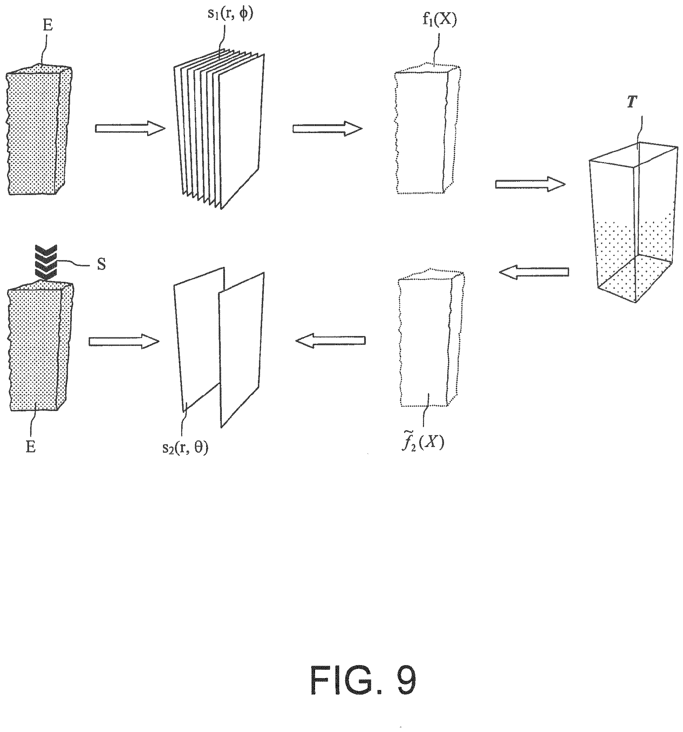

La figure 9 représente le principe de la DVC modifiée selon l'invention.

A titre d'exemple non limitatif, un tomographe utilisé lors d'un procédé selon l'invention est représenté en figure 8. Il comprend principalement :

- Deux générateurs notés GX1 et GX2 de rayons X dont la puissance est adaptée à la taille et à l'absorption de l'échantillon E à analyser. Ces générateurs ont sensiblement les mêmes caractéristiques techniques ;
- Deux détecteurs matriciels D1 et D2, chaque détecteur étant associé à un des deux générateurs de rayons X. Les deux détecteurs sont disposés dans deux plans différents. Généralement, les deux plans sont perpendiculaires entre eux. Ces deux détecteurs ont sensiblement les mêmes caractéristiques techniques. Leur définition en ligne et en colonne est généralement de plusieurs milliers de pixels. A titre d'exemple, la technologie employée est à base de détecteurs « CMOS », acronyme signifiant « Complementary Metal Oxide Semiconductor » avec scintillateur en césium.
- Un ensemble de platines motorisées PM en translation et en rotation portant l'échantillon E. Cet ensemble comporte en particulier une platine en rotation permettant de faire tourner l'échantillon E d'un angle $\phi$ sur 360 degrés avec une grande précision. La platine est disposée de façon à ne pas faire écran entre les générateurs et les détecteurs. L'échantillon est situé à des distances sensiblement identiques des deux détecteurs et des deux générateurs ;
- Des moyens de pilotage et de commande des deux générateurs et des différentes platines non représentés sur la figure 8 ;
- Des moyens d'acquisition et de traitement des différentes données et de reconstruction tridimensionnelle de l'échantillon à partir des différentes radiographies. Ces moyens sont représentés par un calculateur C sur la figure 8.

Comme on l'a dit, le procédé selon l'invention a un grand nombre d'applications :

- Il peut être utilisé pour caractériser les écoulements diphasiques dans les milieux poreux. La technique utilisée est une variante de la reconstruction adaptée aux champs binaires et parcimonieux ;
- Il peut être utilisé pour réaliser des mesures de déplacement d'un échantillon d'un matériau soumis à une sollicitation connue. La technique utilisée est une variante de la technique dite « Projection-based Digital Volume Corrélation » précédemment exposée.

Dans le premier cas, un exemple d'algorithme de reconstruction binaire est présenté dans l'article intitulé « Efficient Binary Tomographic Reconstruction » de S. Roux, H. Leclerc et F. Hild, J. Math Imaging Vis. (2014) 49:335-351.

Dans le second cas, la technique s'inspire des principes décrits dans l'article intitulé « Projection savings in CT-based Digital Volume Corrélation » de H. Leclerc, S. Roux et F. Hild publié dans « Experimental Mechanics »(DOI 10.1007/s11340-014-9871-5). La différence fondamentale entre le dispositif décrit dans cet article et le tomographe selon l'invention est que le dispositif décrit comporte un et un seul générateur de rayon X et un et un seul détecteur. Ainsi, pour réaliser deux radiographies sous deux angles différents, il est nécessaire de faire tourner l'échantillon avec les contraintes que cela entraîne, la principale étant l'impossibilité de suivre l'évolution de l'échantillon en temps réel sans perturbations.

Comme précédemment, la mesure comporte deux étapes. Son principe est exposé en figure 9.

Dans une première étape, on réalise classiquement une première tomographie de l'échantillon E que l'on souhaite analyser. En appelant $s_1(r,\phi)$ les images tomographiques de l'échantillon, on calcule une première fonction de reconstruction tridimensionnelle $f_1$ qui vaut, comme précédemment :

$$f_1(x) = R[s_1(r,\phi)]$$

Cette tomographie est réalisée par les deux ensembles fonctionnant simultanément. Les deux séries d'images obtenues sont mises en correspondance, permettant d'associer les deux référentiels des détecteurs.

Dans une seconde étape, on applique la sollicitation S souhaitée sur l'échantillon E. La sollicitation S est symbolisée par une flèche noire en chevrons sur la figure 9. On réalise alors uniquement deux radiographies simultanées de l'échantillon E sollicité, la première prise par le premier ensemble comportant le premier générateur GX1 et le premier détecteur D1, la seconde prise par le second ensemble comportant le second générateur GX2 et le second détecteur D2. Par construction, ces deux radiographies sont prises sous deux angles $\theta$ différents sans qu'il soit nécessaire de faire tourner l'échantillon. On note $s_2(r, \theta)$ ces deux images.

On sait, par ce qui a été dit précédemment, que les données issues de deux radiographies sont potentiellement suffisantes pour calculer les paramètres $p$ de la transformation $T$. Ainsi, dans le cas particulier de la déformation d'un matériau on calcule les amplitudes $\{a\}$ du champ de déplacement :

$$U(X) = \sum_i a_i \psi_i(X)$$

sur la base de champs $\psi_i(x)$ selon l'algorithme P-DVC ou équivalent. Classiquement, les champs $\psi_i$ sont des fonctions de forme d'éléments finis. Les amplitudes $a_i$ sont déterminés au moyen de la minimisation de la fonction suivante, voisine de l'équation (2), en utilisant les mêmes notations que précédemment :

$$\{a\} = \operatorname{argmin}_{\{b\}} \sum_{\theta} \iint \left( s_2(r,\theta) - P_\theta \left[ f_1(X - b_i \psi_i(X)) \right] \right)^2 dr$$

où $P_\theta$ correspond à la projection de la reconstruction tridimensionnelle $f_1$ corrigée du déplacement sur les plans des détecteurs. Dans le cadre de l'invention, les calculs sont faits à partir des informations issues uniquement des deux images $s_2(r,\theta)$.

Selon une réalisation possible du calcul des champs de déplacement selon l'algorithme P-DVC, l'estimation se fait par itérations successives $n$. A chaque itération, on construit une image de référence artificiellement déformée $\tilde{f}_1(X)$. On a la relation :

$$\tilde{f}_1(X) = f_1(X - a_i^n \psi_i(X))$$

Entre deux itérations, on a la relation simple :

$$a_i^{n+1} = a_i^n + da_i^{n+1}$$

Les termes de correction $da_i^{n+1}$ sont obtenus à partir de la linéarisation des différences dans les images projetées. On définit :

$$g_i^n(r,\theta) = P_\theta \left[ \nabla \tilde{f}_1^n . \Psi_i(X) \right]$$

Le calcul des termes de correction $da_i^{n+1}$ est obtenu par la résolution du système linéaire suivant :

$$M_{ij}^n da_{ij}^{n+1} = dB_i^n$$
$$M_{ij}^n = \sum_{\theta} \iint g_i^n(r,\theta) g_j^n(r,\theta) dr$$

avec et

$$dB_i^n = \sum_\theta \iint \left( s_2(r,\theta) - P_\theta[\tilde{f}_1^n(X)] \right) g_j^n(r,\theta)dr$$

Le processus d'itérations est arrêté dès que les termes de correction sont inférieurs à un seuil prédéterminé. En pratique, la convergence est obtenue après une dizaine d'itérations.

Ainsi, on diminue de façon très significative le nombre de radiographies nécessaires à la détermination du champ de déplacement. De plus, en enregistrant une succession temporelle de couples de premières et de secondes radiographies, il est possible de reconstituer l'évolution du champ de déplacement de l'objet dans le temps d'où la terminologie de « tomographie dynamique » ou « 4D ».

L'avantage principal du procédé selon l'invention est de permettre un suivi dynamique de l'évolution d'un échantillon soumis à une sollicitation donnée. On peut, à titre de premier exemple, l'utiliser pour suivre l'évolution dynamique du front entre deux fluides immiscibles dans un écoulement dynamique sous l'effet d'une pression appliquée. A titre de second exemple, on peut également analyser la dépendance temporelle de la cinématique d'un échantillon soumis à une sollicitation mécanique.

Un tomographe utilisé lors d'un procédé selon l'invention à deux ensembles sources/détecteurs a nécessairement un coût supérieur à un tomographe comportant un seul ensemble. Cependant, l'augmentation de coût est assez limitée dans la mesure où de nombreux éléments du système tomographique peuvent être mutualisés comme les écrans de protection contre les radiations, les platines motorisées, les dispositifs antivibratoires ou encore les systèmes de climatisation.

## Revendications

1. Procédé pour déterminer des évolutions d'un objet au moyen d'un tomographe comportant au moins une première source d'émission (GX1), un premier détecteur matriciel (D1) et des moyens de calcul (C) agencés pour réaliser une tomographie initiale d'un objet (E) à partir de radiographies issues du premier détecteur matriciel prises sous différents angles, **caractérisé en ce que** :

   le tomographe comporte une seconde source d'émission (GX2), un second détecteur matriciel (D2) et, lorsque l'objet est soumis à une sollicitation connue à un instant donné, une transformation (T) de l'objet est déterminée quantitativement et de manière exhaustive par un ensemble (p) de paramètres, les moyens de calcul déterminent les évolutions de l'objet soumis à ladite sollicitation à partir de la seule connaissance d'une première radiographie de l'objet sollicité issue du premier détecteur matriciel, d'une seconde radiographie de l'objet sollicité issue du second détecteur matriciel et de la tomographie initiale, la première radiographie et la seconde radiographie étant prises au même instant donné.

2. Procédé selon la revendication 1, **caractérisé en ce que**, le tomographe comporte des moyens agencés de façon à enregistrer une succession temporelle de couples de premières et de secondes radiographies de façon à reconstituer l'évolution de l'objet dans le temps.

3. Procédé selon l'une des revendications précédentes, **caractérisé en ce que** l'objet étant un milieu poreux, la sollicitation est un écoulement diphasique d'un second fluide dans ledit milieu poreux comportant un premier fluide.

4. Procédé selon l'une des revendications 1 ou 2, **caractérisé en ce que** la sollicitation est une sollicitation mécanique, l'objet se déformant sous la sollicitation.

5. Procédé selon la revendication 4, **caractérisé en ce que** les moyens de calcul mettent en œuvre une variante d'un algorithme de type « DVC » ou « Digital Volume Corrélation », le champ de déplacement de l'objet sollicité étant déterminé à partir de la minimisation de fonctions dépendant de la première et seconde radiographies de l'objet sollicité, et de la tomographie initiale effectuée dans l'état de référence.

6. Procédé selon l'une des revendications précédentes, **caractérisé en ce que** la première et la seconde source d'émission sont des sources de rayonnement X.

**Patentansprüche**

1. Verfahren zum Ermitteln von Verläufen eines Objekts mittels eines Tomographen, der mindestens eine erste Emissionsquelle (GX1), einen ersten Matrixdetektor (D1) und Rechenmittel (C) enthält, die dazu eingerichtet sind, eine ursprüngliche Tomographie eines Objekts (E) anhand von Radiographien zu erstellen, die von dem ersten Matrixdetektor stammen und unter verschiedenen Winkeln aufgenommen wurden, **dadurch gekennzeichnet, dass**:

   der Tomograph eine zweite Emissionsquelle (GX2) und einen zweiten Matrixdetektor (D2) enthält,
   wobei dann, wenn das Objekt einer bekannten Beanspruchung zu einem gegebenen Zeitpunkt ausgesetzt wird, eine Transformation (T) des Objekts quantitativ und vollständig durch einen Satz (p) von Parametern ermittelt wird, wobei die Rechenmittel die Verläufe des der genannten Beanspruchung ausgesetzten Objekts allein aufgrund der Kenntnis einer von dem ersten Matrixdetektor stammenden ersten Radiographie des beanspruchten Objekts, einer von dem zweiten Matrixdetektor stammenden zweiten Radiographie des beanspruchten Objekts und der ursprünglichen Tomographie ermitteln, wobei die erste Radiographie und die zweite Radiographie zum selben gegebenen Zeitpunkt aufgenommen werden.

2. Verfahren nach Anspruch 1, **dadurch gekennzeichnet, dass** der Tomograph Vorrichtungen enthält, die so eingerichtet sind, dass sie eine zeitliche Abfolge von Paaren aus ersten und zweiten Radiographien aufzeichnen, um den zeitlichen Verlauf des Objekts zu rekonstruieren.

3. Verfahren nach einem der vorhergehenden Ansprüche, **dadurch gekennzeichnet, dass** dann, wenn das Objekt ein poröses Medium ist, die Beanspruchung eine zweiphasige Strömung eines zweiten Fluids in dem porösen Medium ist, das ein erstes Fluid enthält.

4. Verfahren nach einem der Ansprüche 1 oder 2, **dadurch gekennzeichnet, dass** die Beanspruchung eine mechanische Beanspruchung ist, wobei sich das Objekt unter der Beanspruchung verformt.

5. Verfahren nach Anspruch 4, **dadurch gekennzeichnet, dass** die Rechenvorrichtungen eine Variante eines Algorithmus vom Typ "DVC" oder "Digital Volume Correlation" implementieren, wobei das Verschiebungsfeld des beanspruchten Objekts anhand von der Minimierung von Funktionen in Abhängigkeit von der ersten und der zweiten Radiographie des beanspruchten Objekts und anhand von der im Referenzzustand erfolgten ursprünglichen Tomographie ermittelt wird.

6. Verfahren nach einem der vorhergehenden Ansprüche, **dadurch gekennzeichnet, dass** die erste und die zweite Emissionsquelle Röntgenstrahlungsquellen sind.


**Claims**

1. Method for determining changes in an object by means of a tomography scanner comprising at least one first emission source (GX1), one first matrix detector (D1) and calculation means (C) arranged to produce an initial tomograph of an object (E) on the basis of radiographs arising from the first matrix detector which are taken from various angles, **characterized in that**:

   the tomography scanner comprises a second emission source (GX2), a second matrix detector (D2) and, when the object is subjected to a known stress at a given instant in time, a transformation (T) is quantitatively and exhaustively defined by a set (p) of parameters, the calculation means determine the changes in the object subjected to said stress based only on the information from a first radiograph of the object under stress arising from the first matrix detector, from a second radiograph of the object under stress arising from the second matrix detector and the initial tomograph, the first radiograph and the second radiograph being taken at the same given instant in time.

2. Method as claimed in claim 1, **characterized in that** the tomography scanner comprises means arranged so as to record a temporal succession of pairs of first and second radiographs so as to reconstruct the change in the object over time.

3. Method as claimed in either of the preceding claims, **characterized in that** as the object is a porous medium, the stress is a two-phase flow of a second fluid through said porous medium comprising a first fluid.

4. Method as claimed in either of claims 1 and 2, **characterized in that** the stress is a mechanical stress, the object being deformed under the stress.

5. Method as claimed in claim 4, **characterized in that** the calculation means implement a variant of an algorithm of DVC, or Digital Volume Correlation, type, the displacement field of the object under stress being determined on the basis of the minimization of functions dependent on the first and second radiographies of the object under stress, and the initial tomography carried out in the reference state.

6. Method as claimed in one of the preceding claims, **characterized in that** the first and second emission sources are X-ray sources.

FIG. 1

FIG. 2

FIG. 3

FIG. 4

FIG. 5

$f(t = t1) - f(t=t0)$

FIG. 6

E

$s_1(r, \phi)$

$f_1(X)$

U(X)

S

E

$s_2(r, \phi)$

$f_2(X)$

# FIG. 7

PM

D2

E

GX1

PM

D1

GX2

C

FIG. 8

E

$s_1(r, \phi)$

$f_1(X)$

T

S

E

$s_2(r, \theta)$

$\widetilde{f}_2(X)$

# FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011142315 A

**Littérature non-brevet citée dans la description**

- Dynamic tomography with a priori information. **GLENN R MYERS et al.** APPLIED OPTICS. OPTICAL SOCIETY OF AMERICA, 10 Juillet 2011, vol. 50, 3685-3690

- **S. ROUX ; H. LECLERC ; F. HILD.** Efficient Binary Tomographic Reconstruction. *J. Math Imaging Vis.,* 2014, vol. 49, 335-351
- **H. LECLERC ; S. ROUX ; F. HILD.** Projection savings in CT-based Digital Volume Corrélation. *Experimental Mechanics*